(19) Europäisches Patentamt
European Patent Office
Office européen des brevets

(11) **EP 3 821 162 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **19731938.7**

(22) Anmeldetag: **14.06.2019**

(51) Internationale Patentklassifikation (IPC):
**F16L 41/02** *(2006.01)*     **F16L 53/38** *(2018.01)*
**F16L 57/02** *(2006.01)*     **F16L 51/00** *(2006.01)*

(52) Gemeinsame Patentklassifikation (CPC):
**F16L 53/38; F16L 41/021; F16L 41/023;**
**F16L 51/00; F16L 57/02;** Y02A 50/20; Y02T 10/12

(86) Internationale Anmeldenummer:
**PCT/EP2019/065652**

(87) Internationale Veröffentlichungsnummer:
**WO 2020/011484 (16.01.2020 Gazette 2020/03)**

(54) **VERBINDUNGSANORDNUNG, INSBESONDERE ZUM DURCHFÜHREN VON WÄSSRIGEN HARNSTOFFLÖSUNGEN**

CONNECTION ASSEMBLY, IN PARTICULAR FOR CONDUCTING AQUEOUS UREA SOLUTIONS

DISPOSITIF DE LIAISON, EN PARTICULIER POUR TRANSPORTER DES SOLUTIONS AQUEUSES D'URÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2018 DE 102018117056**

(43) Veröffentlichungstag der Anmeldung:
**19.05.2021 Patentblatt 2021/20**

(73) Patentinhaber: **Voss Automotive GmbH**
**51688 Wipperfürth (DE)**

(72) Erfinder:
• **RÖHRIG, Lukas**
**51709 Marienheide (DE)**
• **OBERDÖRFER, Alexander**
**42477 Radevormwald (DE)**
• **HEINRICHS, Eugen**
**51702 Bergneustadt (DE)**

(74) Vertreter: **Dr. Solf & Zapf**
**Patent- und Rechtsanwalts PartG mbB**
**Schlossbleiche 20**
**42103 Wuppertal (DE)**

(56) Entgegenhaltungen:
EP-A1- 3 431 855         WO-A1-2006/136306
DE-A1- 102006 048 500    DE-A1- 102016 220 594
DE-U1- 202007 009 337    DE-U1- 202016 107 433
DE-U1- 202017 101 274    DE-U1- 202017 104 003
DE-U1- 8 900 869

**Beschreibung**

Die vorliegende Erfindung betrifft eine Verbindungsanordnung nach dem Oberbegriff von Anspruch 1.

Eine derartige Verbindungsanordnung ist aus der DE 20 2017 101 274 U1 bekannt.

Bei Verbindungsanordnungen für die Durchleitung von wässrigen Medien besteht das Problem, dass bei niedrigen Temperaturen das wässrige Medium unter Volumenausdehnung gefriert. Derartige wässrige Medien sind zum Beispiel wässrige Harnstofflösungen, die bekanntlich im Rahmen so genannter SCR-Verfahren (Selective Catalytic Reduction) in Kraftfahrzeugen verwendet werden, um den Stickstoffgehalt von Abgasen zu reduzieren. Aufgrund der durch das Gefrieren bedingten Volumenausdehnung und des damit einhergehenden Eisdrucks können die Verteiler und/oder Fluidleitungen beschädigt oder sogar vollständig zerstört werden. Grundsätzlich ist es bekannt, solche Verbinder und/oder die angeschlossenen Fluidleitungen zu beheizen. Nichtsdestoweniger ist eine zusätzliche Abhilfe beim Auftreten eines Gefrierens der Lösungen erwünscht.

Bei vorstehend bekannten Verbindungsanordnungen ist das Haltemittel über ein Federelement an einem in dem Gehäuse angeordneten Fixierelement, das als Querwand in einem Schenkel des Gehäuses gestaltet ist, abgestützt, wobei das Haltemittel gegen die Rückstellkraft des Federelementes in Richtung des Fixierelementes verschiebbar ist. Bei dieser bekannten Verbindungsanordnung ist die Montage beziehungsweise Herstellung relativ aufwändig, da die verschiedenen Federelemente vor dem Einsetzen des Verbinderkörpers zusammen mit den Fluidleitungen in das Gehäuse jeweils auf die Fluidleitungen aufgesetzt und während des Einsetzens des Verbinderkörpers mit den eingesteckten Fluidleitungen unter Vorspannung gehalten werden müssen, so dass sie sich im montierten Zustand im Gehäuse am Fixierelement abstützen können. Zudem müssen die Heizleiter der Fluidleitungen jeweils durch eine mittige Öffnung durch das Fixierelement und am Federelement hindurchgeführt werden. Außerdem sind sowohl die Fluidleitungen mit dem Halteelement gegenüber dem Verbinderkörper als auch der Verbinderkörper gegenüber dem Gehäuse in dem Gehäuse zwischen den Fixierelementen beziehungsweise den Federelementen verschiebbar. Dadurch können ungewünschte Vibrationen in der Verbindungsanordnung auftreten.

Der Erfindung liegt die Aufgabe zugrunde, eine Verbindungsanordnung der eingangs genannten Art zur Verfügung zu stellen, bei der die vorstehend geschilderten Probleme und Nachteile effektiv vermieden werden können und die derart gestaltet ist, ohne zusätzliche Kompensationsmittel einem, beim Gefrieren einer durchzuführenden Flüssigkeit entstehenden Eisdruck zerstörungsfrei zu widerstehen.

Die Aufgabe wird erfindungsgemäß durch die Merkmale des Anspruchs 1 gelöst. Die Erfindung basiert darauf, dass der in den Innenkanälen entstehende Eisdruck so gering ist, dass eine Zerstörung des Verbindungsteils vermieden wird. Bei SCR-Flüssigkeiten beträgt die Volumenausdehnung beim Gefrieren ca. 10 %, woraus der jeweilige Eisdruck in Abhängigkeit von der Dimensionierung der Innenkanäle berechnet werden kann.

Erfindungsgemäß ist, wenn die Anschlusselemente zylindrische Muffen sind, in die jeweils Einzelleitungen eingeführt sind, wobei sich die Innenkanäle des Verbindungsteils bis zu den Übergängen vom Verbindungsteil zu den zylindrischen Muffen erstrecken. Demnach besteht die erste Alternative der Erfindung darin, dass die Gesamtlänge der Innenkanäle des Verbindungsteils dividiert durch den Kanalleitungsinnendurchmesser des Verbindungsteils des Verteilers gemäß der folgenden Formel kleiner/gleich 9 ist:

$$\frac{\text{Gesamtlänge der Innenkanäle}}{\text{Kanalleitungsinnendurchmesser}} \leq 9$$

Gemäß einer weiteren Alternative ist erfindungsgemäß, wenn ein Anschlusselement eine zylindrische Muffe ist, in die eine Einzelleitung eingeführt ist und zwei Anschlusselemente Steckanschlüsse sind, die jeweils in Einsteckmuffen (28) der beiden anderen Einzelleitungen (6) eingesteckt sind, wobei sich die Innenkanäle des Verbindungsteils bis zum anschlussseitigen Ende der Steckanschlüsse erstrecken und am Übergang vom Verbindungsteil zur zylindrischen Muffe enden. Erfindungsgemäß ist bei dieser zweiten Alternative, wenn die Gesamtlänge der Innenkanäle des Verbindungsteils nach den folgenden Bemessungen ausgelegt ist:

$$\frac{\text{Gesamtlänge der Innenkanäle}}{\text{Kanalleitungsinnendurchmesser}} \leq 23$$

Erfindungsgemäß ist weiter, wenn das Verbindungsteil des Verteilers einen Kanalleitungsinnendurchmesser aufweist, welcher kleiner oder gleich groß ist wie ein minimaler Anschlussleitungsinnendurchmesser einer angeschlossenen Einzelleitung.

Insbesondere ist es vorteilhaft, wenn die Steckanschlüsse des Verteilers Dichtbereiche aufweisen, und in den Dichtbereichen umlaufend Dichtmittel, insbesondere O-Ringe angeordnet sind, welche einen Dichtmittelaußendurchmesser aufweisen. Bevorzugt ist das Durchmesserverhältnis an einer Verbindungsstelle zwischen Steckanschluss und einer Einzelleitung gemäß der folgenden Formel ausgelegt:

$$\frac{Dichtmittelaußendurchmesser}{Kanalleitungsinnendurchmesser} \leq 6$$

Insbesondere besitzen die Steckanschlüsse des Verteilers eine Wandstärke, welche umlaufend mindestens dem kleinsten Kanalleitungsinnendurchmesser entspricht.

Demnach liegt eine vorteilhafte Ausführung beispielsweise vor, wenn der Anschlussleitungsinnendurchmesser eines medienführenden Rohres 2 mm mit einer Wandstärke von 1 mm, und der Kanalleitungsinnendurchmesser des Verbindungsteils 1,5 mm beträgt. Dadurch wird ein vorteilhaftes Verhältnis zwischen Wandstärke und Kanalleitungsinnendurchmesser geschaffen, welches dem Gefrierschutz der Leitung dient.

Zusätzlich können die Einsteckmuffen eine Blende enthalten, die dem reduzierten Kanalleitungsinnendurchmesser des Verbindungsstücks angepasst ist. Vorteilhafterweise wirkt die Blende als eine Fließbremse, so dass bei größerem Leitungsinnendurchmesser eine entstehende Eissäule nicht vor die Stirnfläche des Verteilers drückt und damit die Verbindung auseinander drücken kann.

Vorteilhafterweise besteht das medienführende Rohr aus nicht gefülltem PA und kann hierdurch den Eisdruck problemlos aufnehmen. Da das Verbindungsteil erfindungsgemäß nur ein kleines Innenvolumen und im Verhältnis dazu eine große Wandstärke aufweist, ist die Verbindungsanordnung vor Beschädigungen durch Eisdrücke geschützt.

Vorteilhafterweise können der Verteiler und/oder die Einsteckmuffen elektrisch beheizt sein. Dafür kann der Verteiler umlaufend mit mindestens einer Heizlitze bewickelt sein. Die Einsteckmuffen können zumindest einseitig mit mindestes einer Heizlitze versehen sein. Hierbei sind die medienführenden Rohre ebenfalls elektrisch beheizt, und eine auf dem medienführenden Rohr aufgebrachte Heizlitze wird insbesondere auf dem Verteiler und/oder den Einsteckmuffen weitergeführt.

Es ist von Vorteil, wenn der Verteiler und die Einsteckmuffen integrierte Führungen und Halterungen für die jeweiligen Heizlitze aufweisen. Da die Heizlitzen sich im Verbindungsbereich der Einsteckmuffen befinden, kann eine gleichmäßige Beheizung der Kombination Verteiler / Einsteckmuffe und Steckanschluss / Einsteckmuffen erreicht werden. Es ist weiterhin von Vorteil, wenn das Gehäuse taschenartige Vertiefungen zur Aufnahme des Verteilers mit seinen zugehörigen Führungen und Halterungen aufweist.

Bevorzugt enthalten Verteiler und Einsteckmuffen auch Mittel zur gegenseitigen Verdrehsicherung, welche laschenartig über die Steckmuffen hinausstehen und in korrespondierende Nuten am Verteiler eingreifen. Bevorzugt sind die Laschen für die Verdrehsicherung an den beiden Einsteckmuffen um einen Winkel, bspw. 90°, auf der Außenwand der Einsteckmuffen versetzt angeordnet. So kann dafür gesorgt werden, dass die Einsteckmuffen mit ihren verbundenen Leitungen nur auf den ihnen zugeordneten Steckanschlüssen montiert werden können (Poka Yoke). Bei einer Fehlmontage kann dann das Gehäuse nicht mehr vollständig geschlossen werden, weil dann die Haltemittel für die Heizlitzen in Gehäusebereichen liegen, welche nicht geeignet sind, diese aufzunehmen.

Insbesondere werden die elektrischen Heizlitzen innerhalb des Gehäuses durch elektrische Steckverbindungen miteinander verbunden, und zwar getrennt von den fluidführenden Verbindungen. Hierfür enthält das Gehäuse Aufnahmekammern, welche die elektrischen Steckverbinder aufnehmen. Bevorzugt enthalten diese Aufnahmekammern Befestigungsmittel, welche die elektrischen Steckverbindungen fixieren.

Bevorzugt besteht das Gehäuse aus einer oberen Gehäusehälfte und einer unteren Gehäusehälfte, wobei die Gehäusehälften über Rastmittel lösbar und wiederverbindbar verbunden sind.

Weitere vorteilhafte Ausgestaltungen der Erfindung sind in den Unteransprüchen enthalten.

In der folgenden Figurenbeschreibung wird die Erfindung näher erläutert.

Es zeigen:

Fig. 1     eine Aufsicht auf eine erfindungsgemäße Verbindungsanordnung bei geöffnetem Gehäuse,

Fig. 2     eine Explosionsansicht einer erfindungsgemäßen Verbindungsanordnung im nicht verbunden Zustand der Verteileranordnung,

Fig. 3     eine Aufsicht auf die erfindungsgemäße Verbindungsanordnung im nichtverbundenen Zustand ohne Gehäuse,

Fig. 4     eine Explosionsansicht einer erfindungsgemäßen Verbindungsanordnung gemäß Fig. 2 ohne elektrische und ohne medienführende Leitungen,

Fig. 5    eine Aufsicht auf einen erfindungsgemäßen Verteiler im nichtverbundenen Zustand mit den zugehörigen Anschlussmitteln,

Fig. 5a    eine Schnittansicht entlang der Linie A-A des erfindungsgemäßen Verteilers gemäß Fig. 5,

Fig. 5b    eine Schnittansicht entlang der Linie B-B des erfindungsgemäßen Verteilers gemäß Fig. 5,

Fig. 5c    eine Schnittansicht entlang der Linie C-C des erfindungsgemäßen Verteilers gemäß Fig. 5a.

Fig. 6    eine Ansicht auf die der Einsteckrichtung gemäß Fig. 4 zugewandte Seite eines erfindungsgemäßen Verteilers im nichtverbundenen Zustand mit den zugehörigen Anschlussmitteln, und

Fig. 7    eine Aufsicht auf eine erfindungsgemäße untere Gehäusehälfte eines zweiteiligen Gehäuses.

In den verschiedenen Figuren der Zeichnung sind gleiche Teile stets mit denselben Bezugszeichen versehen.

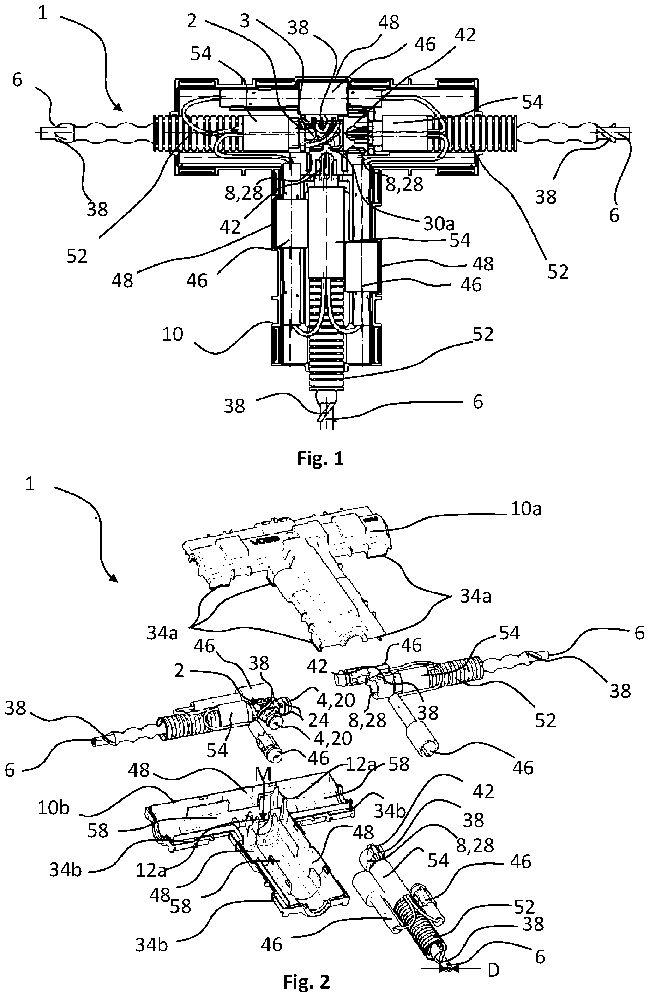

Im Folgenden ist der erfindungsgemäße Verteiler 2 in den Fig. 1 bis 7 T-förmig. Es liegt ebenfalls im Rahmen der Erfindung, wenn der Verteiler z. B. Y-förmig gestaltet ist.

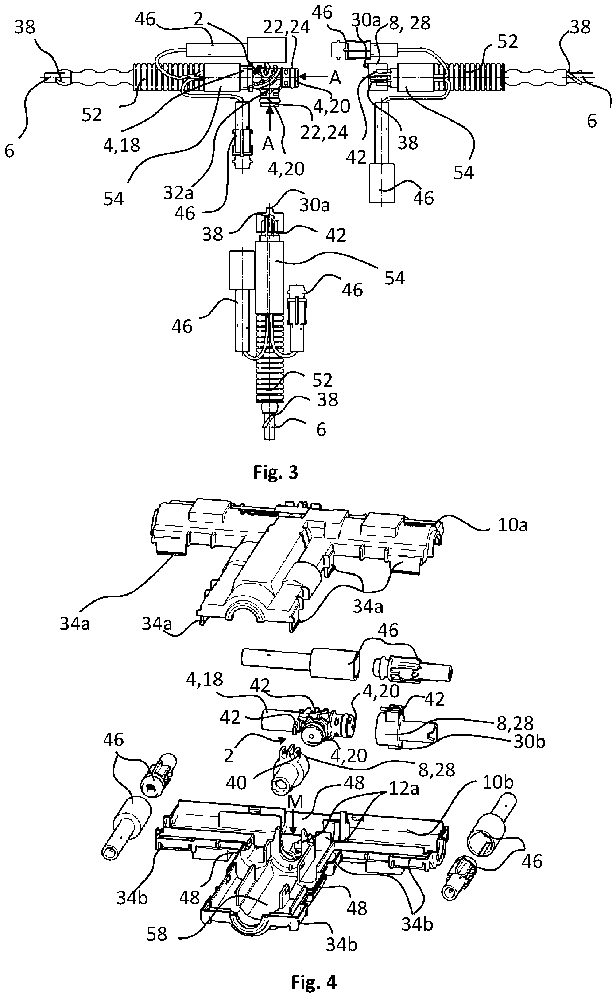

Figur 1 zeigt eine erfindungsgemäße Verbindungsanordnung 1, insbesondere zum Durchführen von wässrigen Harnstofflösungen. Wie in den Fig. 1 bis 6 zu erkennen ist, weist die erfindungsgemäße Verbindungsanordnung 1 einen Verteiler 2 mit drei Anschlusselementen 4, 18, 20 und ein zwischen den Anschlusselementen 4, 18, 20 liegendes Verbindungsteil 3 auf. An jedem der drei Anschlusselemente 4, 18, 20 ist jeweils eine medienführende Einzelleitung 6 angeschlossen. Die drei Einzelleitungen 6 besitzen hierfür endseitig Anschlussmittel 8, 28. Die Anschlussmittel 8, 28 sind losgelöst von den Einzelleitungen 6 in Fig. 4 dargestellt. Demnach sind die Einzelleitungen 6 mittels der Anschlussmittel 8, 28 mit den Anschlusselementen 4, 18, 20 des Verteilers 2, wie in Fig. 1 dargestellt, verbunden. Ein Gehäuse 10 umschließt den Verteiler 2 und einen Teil der Einzelleitungen 6 in deren Anschlussbereich. Das Gehäuse 10 besteht insbesondere aus zwei Gehäusehälften 10a, 10b, siehe Fig. 2, und der Verteiler 2 wird mit den angeschlossenen medienführenden Einzelleitungen 6 in eine der Gehäusehälften 10b im geöffneten Zustand des Gehäuses 10 eingesetzt.

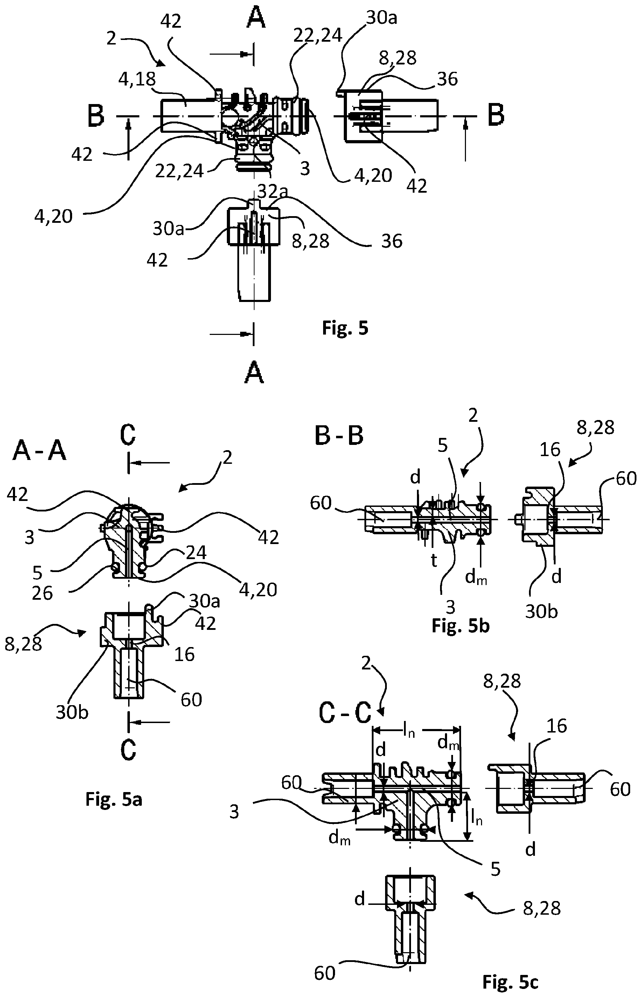

Die Fig. 5 bis 6 zeigen den erfindungsgemäßen Verteiler 2 und die erfindungsgemäßen Anschlusselemente 4, 18, 20 sowie die erfindungsgemäßen Anschlussmittel 8, 28, wobei die Anschlusselemente 4, 18, 20 und die Anschlussmittel 8, 28 in diesen Abbildungen nicht mit den Einzelleitungen 6 verbunden sind. Insbesondere die Schnittansichten gemäß Fig. 5a bis 5c zeigen das erfindungsgemäße Verbindungsteil 3. Fig. 5b und 5c zeigen Innenkanäle 5 des Verteilers 2, einen Kanalinnendurchmesser $d$ der Innenkanäle 5, eine Gesamtlänge $I_g$ der Innenkanäle 5 und eine Wandstärke $t$ des Verbindungsteils 3. Dabei sind der Kanalinnendurchmesser $d$ der Innenkanäle 5, die Gesamtlänge $I_g$ der Innenkanäle 5 und die Wandstärke $t$ des Verbindungsteil 3 derart bemessen, dass ein beim Gefrieren einer im Verteiler 2 befindlichen Flüssigkeit entstehender Eisdruck keine Zerstörung des Verteilers 2 bewirkt. Insbesondere wird die Gesamtlänge $I_g$ der Innenkanäle 5 des Verbindungsteils 3 aus der Summe der einzelnen abgezweigten Kanalabschnitte $I_n$, wie in Fig. 5c dargestellt, bestimmt.

Wie in den Fig. 5 bis 5c dargestellt, ist ein Anschlusselement 4 insbesondere eine zylindrische Muffe 18 , in die eine Einzelleitung 6 eingeführt ist, und die beiden anderen Anschlusselemente 4 sind Steckanschlüsse 20, die in Einsteckmuffen 28 eingesteckt sind/werden, wobei diese Einsteckmuffen 28 an den medienführenden Einzelleitungen 6 befestigt sind.

Wie beispielsweise in Fig. 5c dargestellt, haben die Einsteckmuffen 28 an der vom Steckanschluss 20 abgewandten Seite einen muffenartigen Einführungsabschnitt 60 zum Einführen der Einzelleitungen 6. Einen solchen Einführungsabschnitt 60 hat die zylindrische Muffe 18 des Verteilers 2, wie in Fig. 5c dargestellt, ebenfalls.

Vorteilhafterweise werden die Einzelleitungen 6 insbesondere in die Einführungsabschnitte 60 eingeführt und mit dem Einführungsabschnitt 60 verbunden. Insbesondere ist eine Einzelleitung 6 stoffschlüssig mit der zylindrischen Muffe 18 des Verteilers 2 und/oder die Einsteckmuffen 28 stoffschlüssig mit den Einzelleitungen 6 verbunden.

Bevorzugt wird eine Einzelleitung 6 mit der zylindrischen Muffe 18 und/oder die Einzelleitungen 6 mit den Einsteckmuffen 28 durch eine Laserschweißung verbunden. Dafür kann die zylindrische Muffe 18 und/oder die Einsteckmuffen 28 der Einzelleitungen 6 teilweise aus lasertransparentem Kunststoff hergestellt werden. Der vollständig zusammengesteckte Zustand der Verbindungsanordnung 1 ist in Fig. 1 dargestellt. Insbesondere erstrecken sich die Innenkanäle 5 des Verbindungsteils 3 bis zum anschlussseitigen Ende der Steckanschlüsse 20 und enden am Übergang von Verbindungsteil 3 zur zylindrischen Muffe 18.

Erfindungsgemäß ist, wenn das Verbindungsteil 3 einen Kanalleitungsinnendurchmesser $d$ aufweist, der kleiner oder gleich groß ist wie ein minimaler Anschlussleitungsinnendurchmesser $D$, dargestellt in Figur 2, einer angeschlossenen Einzelleitung 6.

Erfindungsgemäß ist die Gesamtlänge $I_g$ der Innenkanäle 5, welche aus den Innenkanalabschnitten $I_n$ bestimmt wird, dividiert durch den Kanalleitungsinnendurchmesser $d$ des Verbindungsteils 3 des Verteilers 2 als Ergebnis kleiner/gleich 23. Das heißt:

$$\frac{\text{Gesamtlänge } (l_g) \text{ der Innenkanäle (5)}}{\text{Kanalleitungsinnendurchmesser (d)}} \leq 23$$

Gemäß einer nicht dargestellten erfindungsgemäßen Alternative, bei der die Anschlusselemente 4 des Verteilers 2 ausschließlich drei zylindrische Muffen 18 sind, in die jeweils eine Einzelleitung 6 eingeführt ist, erstrecken sich die Innenkanäle 5 des Verbindungsteils 3 bis zu den Übergängen vom Verbindungsteil 3 zu den zylindrischen Muffen 18. Erfindungsgemäß ist die Gesamtlänge $l_g$ der Innenkanäle 5 des Verbindungsteils 3 dividiert durch den Kanalleitungsinnendurchmesser d des Verbindungsteils 3 des Verteilers 2 in dieser Ausführung gemäß der folgenden Formel insbesondere kleiner/gleich 9:

$$\frac{\text{Gesamtlänge } (l_g) \text{ der Innenkanäle (5)}}{\text{Kanalleitungsinnendurchmesser (d)}} \leq 9$$

Wie in Fig. 5b dargestellt, weist der Verteiler 2 eine Wandstärke t auf. Insbesondere entspricht die Wandstärke t des Verteiler 2 umlaufend mindestens dem Kanalleitungsinnendurchmesser d.

Bevorzugt haben die Steckanschlüsse 20, wie in den Fig. 5 bis 5c dargestellt, Dichtbereiche 22. Dabei weisen die Dichtbereiche 22 jeweils umlaufende Dichtmittel 24, insbesondere einen O-Ring, auf. Insbesondere haben die O-Ringe einen Dichtmittelaußendurchmesser $d_m$. Das Durchmesserverhältnis an einer Verbindungsstelle zwischen Einsteckmuffe 28 und Steckanschluss 20 ist entsprechend der folgenden Formel als Ergebnis kleiner/gleich 6.

$$\frac{Dichtmittelaußendurchmesser\ (d_m)}{\text{Kanalleitungsinnendurchmesser (d)}} \leq 6$$

Insbesondere weist der Dichtbereich 22, wie beispielsweise in Fig. 5a dargestellt, eine Dichtungsnut 26 für die Dichtmittel 24 auf.

Gemäß einer vorteilhaften Ausführung, und wie in Fig. 5a bis 5c dargestellt, können die Einsteckmuffen 28 der Einzelleitungen 6 eine Blende 16 enthalten, die den Anschlussleitungsinnendurchmesser D auf den Kanalleitungsinnendurchmesser d des Verbindungsteils 3 des Verteilers 2 reduziert. Weiterhin kann eine solche Blende 16 einen Anschlag für den Steckanschluss 20 des Verteilers 2 und einen Anschlag für die medienführende Einzelleitung 6 bilden.

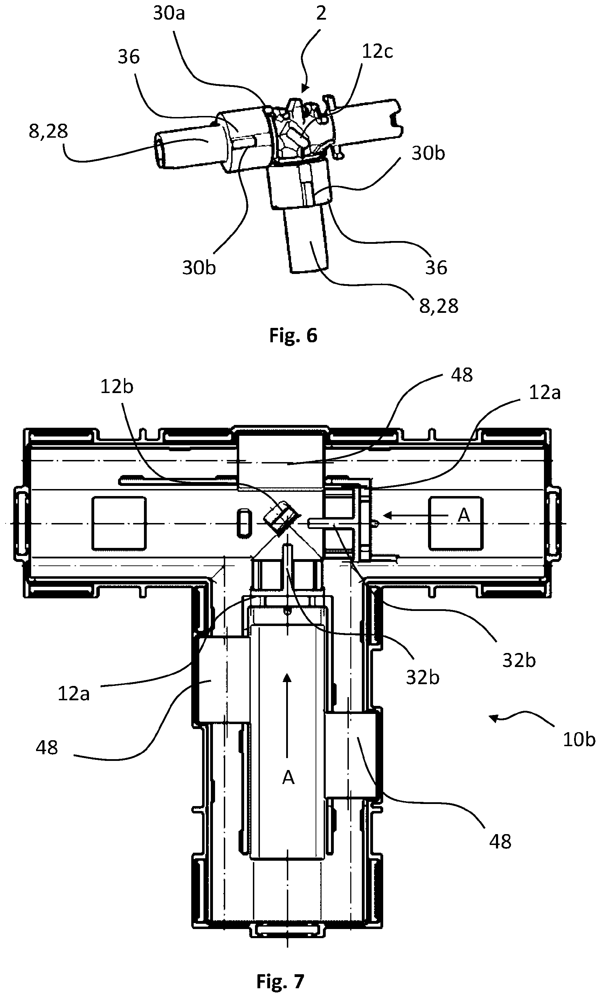

Gemäß Fig. 5 bis 6 haben die Einsteckmuffen 28 an einer Außenwand 36 bevorzugt laschenartige Verdrehsicherungen 30a und Führungsstege 30b vorstehen, die in korrespondierende Nuten 32a am Verteiler 2 und Führungsnuten 32b am Gehäuse 10, dargestellt in Fig. 7, eingreifen. Die laschenartigen Verdrehsicherungen 30a können insbesondere in einem Winkel um 90° versetzt an der Außenwand 36 der Einsteckmuffen 28 angeordnet sein, wobei die korrespondierenden Nuten 32a am Verteiler 2, ebenfalls um 90° versetzt angeordnet sind und die Führungsstege 30b an der Außenwand 36 und die Führungsnuten 32b im Gehäuse 10 stets in Richtung einer, in Fig. 2 dargestellten, Einsteckrichtung M ausgerichtet sind und axial zu einer, in Fig. 3 und 7 dargestellten, Anschlussrichtung A verlaufen.

Gemäß einer weiteren Ausführung, wie in Fig. 1 bis 3 dargestellt, ist der Verteiler 2 elektrisch beheizbar. Dafür ist der Verteiler 2 umlaufend mit einer Heizlitze 38 bewickelt. Die Einsteckmuffen 28 sind einseitig mit einer Heizlitze 38 versehen. Hierbei sind die medienführenden Einzelleitungen 6 ebenfalls elektrisch beheizt, und eine auf der medienführenden Einzelleitung 6 aufgebrachte Heizlitze 38 wird insbesondere auf dem Verteiler 2 und/oder den Einsteckmuffen 28 weitergeführt. Wie in Fig. 1 dargestellt, sind die Einzelleitungen 6 dafür mit zwei Heizlitzen 38, insbesondere parallel geführt, umwickelt.

Vorteilhafterweise weist der Verteiler 2 und/oder die Einsteckmuffen 28 wie in Fig. 2 dargestellt, integrierte Führungen und Halterungen 42 für die Heizleiterlitzen 38 auf. Insbesondere weist das Gehäuse 10 taschenartige Vertiefungen 58 zur Aufnahme des Verteilers 2 mit seinen zugehörigen Führungen und Halterungen 42 auf.

Fig. 2, 4 und 6 bis 7 zeigen, dass das Gehäuse 10 vorteilhafterweise Haltemittel 12a, 12b für den Verteiler 2 und die Anschlussmittel 8, 28 aufweist, wobei zumindest ein Teil der Haltemittel 12a für die Anschlussmittel 8, 28 in dem Gehäuse 10 insbesondere C-förmig gestaltet ist und die Anschlussmittel 8, 28 rastend fixiert, und ein weiterer Teil der Haltemittel 12b für den Verteiler 2 eine, insbesondere in einem Winkel von 45° zu den Anschlusselementen 4, 18, 20 ausgerichtete, Anschlaglasche 12b für den Verteiler 2 ist, an welcher der Verteiler 2 mit einer zu der Anschlaglasche 12b des Gehäuses 10 korrespondierend angeordneten Anlagelasche 12c anliegt. Wie in Fig. 2 und 4 dargestellt, sind die C-förmigen Haltemittel 12a insbesondere entgegen der Einsteckrichtung M geöffnet, so dass der Verteiler 2 und die mit dem Verteiler 2 verbundenen Einzelleitungen 6 in Einsteckrichtung M in das Gehäuse 10 eingeführt werden können und die Anschlussmittel 8, 28 von den Haltemitteln 12a umgriffen werden. Vorteilhaft greifen die Haltemittel 12a hinter die Einsteckmuffen 28, und bilden einen Anschlag für die Einsteckmuffen 28 entgegen der in Fig. 3 gekennzeichneten Anschlussrichtung A, so dass sich im in das Gehäuse 10 eingesetzten Zustand, wie in Fig. 1 dargestellt, die Einzelleitungen 6 mit den Einsteckmuffen 28 nicht von den Steckanschlüssen 20 des Verteilers 2 lösen können. Durch das Zusammenwirken der Haltemittel 12b, 12c und der Haltemittel 12a mit den Anschlussmitteln 8, 28 wird der Verteiler 2 im montierten Zustand, wie in Fig. 1 dargestellt, schwimmend gelagert.

Fig. 2 und 4 zeigen weiterhin, dass das Gehäuse 10 vorteilhaft zweiteilig in eine obere Gehäusehälfte 10a und eine untere Gehäusehälfte 10b geteilt ist. Insbesondere haben die Gehäusehälften 10a, 10b lösbare und wiederverbindbare Rastmittel 34a, 34b. Wie in Fig. 3 dargestellt, sind insbesondere an der oberen Gehäusehälfte 10a Rastarme 34a angeordnet, die in korrespondierende Aussparungen 34b in der unteren Gehäusehälfte 10b eingreifen.

Bevorzugt weisen die Einzelleitungen 6 eine Schutzhülle 52, insbesondere ein Wellenrohr, auf, welche die Einzelleitungen 6 und die Heizlitzen 38, wie in Fig. 3 dargestellt, umschließt.

Wie in Fig. 3 dargestellt, sind die Heizlitzen 38 der Einzelleitungen 6 innerhalb des Gehäuses 10 miteinander durch elektrische Steckverbinder 46 verbunden. Insbesondere sind die Heizlitzen 38 der Einzelleitungen 6, wie in Fig. 1 dargestellt, durch die elektrischen Steckverbinder 46 unabhängig von den fluidführenden Verbindungen miteinander verbunden und in das Gehäuse 10 eingelegt.

Hierfür weist das Gehäuse 10 insbesondere Aufnahmekammern 48 für die elektrischen Steckverbinder 46 auf, so dass die elektrischen Steckverbinder 46 von der Aufnahmekammer 48 des Gehäuses 10 umschlossen sind. Insbesondere weist die Aufnahmekammer 48 für die elektrischen Steckverbinder 46 Befestigungsmittel 50 auf, welche die elektrischen Steckverbinder 46 fixieren.

Einer weiteren vorteilhaften Ausführung entsprechend Fig. 1, sind die Heizlitzen 38 zu den elektrischen Steckverbindern 46 oberseitig der Einzelleitungen 6 zumindest abschnittweise parallel zu der jeweiligen Einzelleitung 6 geführt und von einer Manschette 54 umschlossen.

Insbesondere sind die Einzelleitungen 6 aus nicht gefülltem Polyamid hergestellt, und können einen gesteigerten Innendruck, welcher sich beim Gefrieren eines in der Leitung befindlichen Fluides bilden kann, kompensieren.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist.

Die Erfindung ist nicht auf die dargestellten und beschriebenen Ausführungsbeispiele beschränkt, sondern umfasst auch alle im Sinne der Erfindung gleichwirkenden Ausführungen.

Bezugszeichenliste

| | |
|---|---|
| 1 | Verbindungsanordnung |
| 2 | Verteiler |
| 3 | Verbindungsteil |
| 4 | Anschlusselemente |
| 5 | Innenkanäle |
| 6 | Einzelleitungen |
| 8 | Anschlussmittel |
| 10 | Gehäuse |
| 10a | obere Gehäusehälfte |
| 10b | untere Gehäusehälfte |
| 12a | Haltemittel für die Anschlussmittel |
| 12b | Anschlaglasche |
| 12c | Anlagelasche |
| 16 | Blende |
| 18 | zylindrische Muffe |
| 20 | Steckanschlüsse |
| 22 | Dichtbereich |
| 24 | Dichtmittel |
| 26 | Dichtungsnut |
| 28 | Einsteckmuffen |
| 30a | Laschenartige Verdrehsicherung |
| 30b | Führungsstege |
| 32a | Nut im Verteiler |
| 32b | Führungsnut im Gehäuse |

| 34a | Rastarme |
|---|---|
| 34b | Aussparungen |
| 36 | Außenwand der Anschlussmittel |
| 38 | Heizlitzen |
| 42 | Führung und Halterung für Heizlitzen |
| 46 | elektrische Steckverbinder |
| 48 | Aufnahmekammer |
| 50 | Befestigungsmittel |
| 52 | Schutzhülle |
| 54 | Manschette |
| 58 | taschenartige Vertiefungen |
| 60 | Einführungsabschnitt |

| d | Kanalleitungsinnendurchmesser |
|---|---|
| D | Anschlussleitungsinnendurchmesser |
| $d_m$ | Dichtmittelaußendurchmesser |
| t | Wandstärke des Verteilers |
| $l_g$ | Gesamtlänge der Innenkanäle |
| $l_n$ | Kanalabschnitt |

| A | Anschlussrichtung |
|---|---|
| M | Einsteckrichtung |

**Patentansprüche**

1. Verbindungsanordnung (1), insbesondere zum Durchführen von wässrigen Harnstofflösungen, umfassend einen Verteiler (2) mit mindestens drei Anschlusselementen (4, 18) und einem zwischen den Anschlusselementen (4, 18) liegenden Verbindungsteil (3) mit in diesem verlaufenden Innenkanälen (5) und drei Einzelleitungen (6), wobei die Einzelleitungen (6) Anschlussmittel (8) aufweisen, und die Einzelleitungen (6) mittels der Anschlussmittel (8) mit den Anschlusselementen (4, 18) des Verteilers (2) verbunden sind, und ein Gehäuse (10), welches den Verteiler (2) und zumindest einen Teil der Einzelleitungen (6) umschließt, wobei der Verteiler (2) zusammen mit den Endabschnitten der verbundenen Einzelleitungen (6) im Gehäuse (10) angeordnet ist, ein Kanalinnendurchmesser (d) der Innenkanäle (5) des Verbindungsteils (3) und eine Gesamtlänge ($l_g$) der Innenkanäle (5) des Verbindungsteils (3) und eine Wandstärke (t) des Verteilers (2) im Verbindungsteil (3) derart bemessen sind, dass beim Gefrieren einer im Verteiler (2) befindlichen Flüssigkeit ein entstehender Eisdruck an dem Verteiler (2) keine Zerstörung bewirkt, wobei die Anschlusselemente (4, 18) zylindrische Muffen (18) sind, in die jeweils eine Einzelleitung (6) eingeführt ist, wobei sich die Innenkanäle (5) des Verbindungsteils (3) bis zu den Übergängen vom Verbindungsteil (3) zu den zylindrischen Muffen (18) erstrecken,

   **dadurch gekennzeichnet, dass**

   die Gesamtlänge ($l_g$) der Innenkanäle (5) des Verbindungsteils (3) dividiert durch den Kanalleitungsinnendurchmesser (d) des Verbindungsteils (3) des Verteilers (2) gemäß der folgenden Formel kleiner/gleich 9 ist:

$$\frac{\text{Gesamtlänge } (l_g) \text{ der Innenkanäle (5)}}{\text{Kanalleitungsinnendurchmesser (d)}} \leq 9$$

   und wobei das Verbindungsteil (3) des Verteilers (2) einen Kanalleitungsinnendurchmesser (d) aufweist, welcher kleiner oder gleich groß ist wie ein minimaler Anschlussleitungsinnendurchmesser (D) einer angeschlossenen Einzelleitung (6).

2. Verbindungsanordnung (1), insbesondere zum Durchführen von wässrigen Harnstofflösungen, umfassend einen Verteiler (2) mit mindestens drei Anschlusselementen (4, 18, 20) und einem zwischen den Anschlusselementen (4, 18, 20) liegenden Verbindungsteil (3) mit in diesem verlaufenden Innenkanälen (5) und drei Einzelleitungen (6), wobei die Einzelleitungen (6) Anschlussmittel (8, 28) aufweisen, und die Einzelleitungen (6) mittels der Anschlussmittel (8, 28) mit den Anschlusselementen (4, 18, 20) des Verteilers (2) verbunden sind, und ein Gehäuse (10), welches den Verteiler (2) und zumindest einen Teil der Einzelleitungen (6) umschließt, wobei der Verteiler (2) zusammen mit den Endabschnitten der verbundenen Einzelleitungen (6) im Gehäuse (10) angeordnet ist, ein Kanalinnendurchmesser (d) der Innenkanäle (5) des Verbindungsteils (3) und eine Gesamtlänge ($l_g$) der Innenkanäle (5) des Verbindungsteils (3) und eine Wandstärke (t) des Verteilers (2) im Verbindungsteil (3) derart bemessen sind, dass beim Gefrieren einer im Verteiler (2) befindlichen Flüssigkeit ein entstehender Eisdruck an dem Verteiler (2) keine Zerstörung bewirkt **dadurch gekennzeichnet, dass**
ein Anschlusselement (4,18) eine zylindrische Muffe (18) ist, in die eine Einzelleitung (6) eingeführt ist und die beiden anderen Anschlusselemente (4, 20) Steckanschlüsse (20) sind, die jeweils in Einsteckmuffen (28) der beiden anderen Einzelleitungen (6) eingesteckt sind, wobei sich die Innenkanäle (5) des Verbindungsteils (3) bis zum anschlussseitigen Ende der Steckanschlüsse (20) erstrecken und am Übergang vom Verbindungsteil (3) zur zylindrischen Muffe (18) enden und die Gesamtlänge (lg) der Innenkanäle (5) des Verbindungsteils (3) dividiert durch den Kanalleitungsinnendurchmesser (d) des Verbindungsteils (3) des Verteilers (2) gemäß der folgenden Formel kleiner/gleich 23 ist:

$$\frac{\text{Gesamtlänge } (l_g) \text{ des Innenkanals (5)}}{\text{Kanalleitungsinnendurchmesser (d)}} \leq 23$$

und wobei das Verbindungsteil (3) des Verteilers (2) einen Kanalleitungsinnendurchmesser (d) aufweist, welcher kleiner oder gleich groß ist wie ein minimaler Anschlussleitungsinnendurchmesser (D) einer angeschlossenen Einzelleitung (6).

3. Verbindungsanordnung nach Anspruch 2,
   **dadurch gekennzeichnet, dass** die Steckanschlüsse (20) Dichtbereiche (22) aufweisen, und die Dichtbereiche (22) umlaufend Dichtmittel (24) angeordnet haben, welche einen Dichtmittelaußendurchmesser ($d_m$) aufweisen, wobei der Dichtmittelaußendurchmesser ($d_m$) an einer Verbindungsstelle zwischen Einsteckmuffe (28) und Steckanschluss (20) dividiert durch den Kanalleitungsinnendurchmesser (d) gemäß der folgenden Formel kleiner/gleich 6 ist:

$$\frac{Dichtmittelaußendurchmesser\ (d_m)}{\text{Kanalleitungsinnendurchmesser (d)}} \leq 6$$

4. Verbindungsanordnung (1) nach Anspruch 2 oder 3,
   **dadurch gekennzeichnet, dass** die Einsteckmuffen (28) der Einzelleitung (6) eine Blende (16) enthalten, die den Anschlussleitungsinnendurchmesser (D) auf den Kanalleitungsinnendurchmesser (d) des Verbindungsteils (3) des Verteilers (2) reduziert.

5. Verbindungsanordnung (1) nach einem der Ansprüche 2 bis 4,
   **dadurch gekennzeichnet, dass** die Einsteckmuffen (28) stoffschlüssig mit den Einzelleitungen (6) verbunden sind.

6. Verbindungsanordnung (1) nach einem der Ansprüche 2 bis 5,
   **dadurch gekennzeichnet, dass** an einer Außenwand (36) der Einsteckmuffen (28) der Einzelleitungen (6) laschenartige Verdrehsicherungen (30a) und Führungsstege (30b) vorstehen, die in korrespondierende Nuten (32a) am Verteiler (2) und Führungsnuten (32b) am Gehäuse (10) eingreifen.

7. Verbindungsanordnung (1) nach Anspruch 6,
   **dadurch gekennzeichnet, dass** die laschenartigen Verdrehsicherungen (30a) in einem Winkel um 90° versetzt an der Außenwand (36) der Einsteckmuffen (28) angeordnet sind und die korrespondierenden Nuten (32a) am Verteiler (2) ebenfalls um 90° versetzt sind und die Führungsstege (30b) und die Führungsnuten (32b) im Gehäuse (10) stets in Richtung einer Einsteckrichtung (M) ausgerichtet sind.

8. Verbindungsanordnung (1) nach einem der 2 bis 7,
   **dadurch gekennzeichnet, dass** die Einsteckmuffen (28) elektrisch beheizbar sind und zumindest einseitig mit mindestens einer Heizlitze (38) versehen sind.

9. Verbindungsanordnung (1) nach einem der Ansprüche 1 bis 8,
   **dadurch gekennzeichnet, dass** der Verteiler (2) elektrisch beheizbar ist und umlaufend mit mindestens einer Heizlitze (38) bewickelt ist.

10. Verbindungsanordnung (1) nach Anspruch 8 oder 9,
    **dadurch gekennzeichnet, dass** der Verteiler (2) und/oder die Einsteckmuffen (28) integrierte Führungen und Halterungen (42) für die Heizlitzen (38) aufweisen.

11. Verbindungsanordnung (1) nach Anspruch 10,
dadurch gekennzeichnet, dass das Gehäuse (10) taschenartige Vertiefungen (58) zur Aufnahme des Verteilers (2) mit seinen zugehörigen Führungen und Halterungen (42) aufweist.

12. Verbindungsanordnung (1) nach einem der Ansprüche 1 bis 11,
dadurch gekennzeichnet, dass die Wandstärke (t) des Verteilers (2) im Verbindungsteil (3) umlaufend mindestens dem kleinsten Kanalleitungsinnendurchmesser (d) entspricht.

13. Verbindungsanordnung (1) nach einem der Ansprüche 1 bis 12,
dadurch gekennzeichnet, dass eine Einzelleitung (6) stoffschlüssig mit der/einer zylindrischen Muffe (18) des Verteilers (2) verbunden ist.

14. Verbindungsanordnung (1) nach einem der Ansprüche 1 bis 13,
dadurch gekennzeichnet, dass das Gehäuse (10) Haltemittel (12a, 12b) für den Verteiler (2) und die Anschlussmittel (8, 28) aufweist, wobei zumindest ein Teil der Haltemittel (12a) für die Anschlussmittel (8,28) in dem Gehäuse (10) C-förmig gestaltet ist und die Anschlussmittel (8, 28) rastend fixiert und ein weiterer Teil der Haltemittel (12b) für den Verteiler (2) eine, in einem Winkel von 45° zu den Anschlusselementen (4, 18, 20) des Verteilers (2) ausgerichtete Anschlaglasche (12b) für den Verteiler (2) ist, an welcher der Verteiler (2) mit einer zu der Anschlaglasche (12b) des Gehäuses (10) korrespondierend angeordneten Anlagelasche (12c) anliegt.

15. Verbindungsanordnung (1) nach einem der Ansprüche 1 bis 14,
dadurch gekennzeichnet, dass die Einzelleitungen (6) elektrisch beheizbar sind und mit mindestens zwei Heizlitzen (38) umwickelt sind.

## Claims

1. Connector arrangement (1), in particular for conducting liquid urea solutions, comprising a distributor (2) with at least three connecting elements (4, 18) and a connecting component (3) located between the connecting elements (4, 18), with inner channels (5) running within this connecting component (3) and three individual lines (6), wherein the individual lines (6) exhibit connecting means (8), and the individual lines (6) are connected to the connecting elements (4, 18) of the distributor (2) by means of the connecting means (8), and a housing (10) which surrounds the distributor (2) and at least a part of the individual lines (6), wherein the distributor (2) is disposed in the housing (10) together with the end sections of the connected individual lines (6), wherein

   a channel line inner diameter (d) of the inner channels (5) of the connecting component (3) and a total length ($l_g$) of the inner channels (5) of the connecting component (3) and a wall thickness (t) of the distributor (2) in the connecting component (3) are dimensioned such that ice pressure on the distributor (2) which occurs as a result of the freezing of a liquid within the distributor (2) does not result in any destruction,
   wherein the connecting elements (4, 18) are cylindrical sleeves (18), into each of them an individual line (6) is inserted, wherein the inner channels (5) of the connecting component (3) extend all the way to the transitions from the connecting component (3) to the cylindrical sleeve (18)
   characterized in that the total length ($l_g$) of the inner channels (5) of the connecting component (3) divided by the channel line inner diameter (d) of the connecting component (3) of the distributor (2) is less than or equal to 9 in the following formula:

$$\frac{\text{total length } \left(l_g\right) \text{ of the inner channels (5)}}{\text{channel line inner diameter (d)}} \leq 9$$

   and wherein the connecting component (3) of the distributor (2) exhibits a channel line inner diameter (d) which is less than or equal to a minimal connection line inner diameter (D) of a connected individual line (6).

2. Connector arrangement (1), in particular for conducting liquid urea solutions, comprising a distributor (2) with at least three connecting elements (4, 18, 20) and a connecting component (3) located between the connecting elements (4, 18, 20), with inner channels (5) running within this connecting component (3) and three individual lines (6), wherein the individual lines (6) exhibit connecting means (8, 28), and the individual lines (6) are connected to the connecting elements (4, 18, 20) of the distributor (2) by means of the connecting means (8, 28), and a housing (10) which surrounds the distributor (2) and at least a part of the individual lines (6), wherein the distributor (2) is disposed in the housing (10) together with the end sections of the connected individual lines (6), a channel line inner diameter (d) of the inner channels (5) of the connecting component (3) and a total length ($l_g$) of the inner channels (5) of the connecting component (3) and a wall thickness (t) of the distributor (2) in the connecting component (3) are dimensioned such that ice pressure on the distributor (2) which occurs as a result of the freezing of a liquid within the distributor (2) does not result in any destruction,

**characterized in that** one connecting element (4, 18) is a cylindrical sleeve, into which an individual line (6) is inserted, and both of the other two connecting elements (4, 20) are plug connections (20), each of the plug connections (20) are inserted in insertion sleeves (28) of the other individual lines (6), whereby the inner channels (5) of the connecting component (3) extend to the connection-side end of the plug connections (20) and end at the transition from the connecting component (3) to the cylindrical sleeve (18), and the total length ($l_g$) of the inner channels (5) of the connecting component (3) divided by the channel line inner diameter (d) of the connecting component (3) of the distributor (2) is less than or equal to 23 in the following formula:

$$\frac{\text{total length } \left(l_g\right) \text{ of the inner channels (5)}}{\text{channel line inner diameter (d)}} \leq 23$$

and wherein the connecting component (3) of the distributor (2) exhibits a channel line inner diameter (d) which is less than or equal to a minimal connection line inner diameter (D) of a connected individual line (6).

3. Connector arrangement (1) according to claim 2,
**characterized in that** the plug connections (20) exhibit sealing areas (22), and the sealing areas (22) have circumferentially disposed sealing means (24) which exhibit a sealing means outer diameter ($d_m$), wherein the sealing means outer diameter ($d_m$) at a connecting point between the insertion sleeve (28) and the plug connection (20) divided by the channel line inner diameter (d) is less than or equal to 6 according to the following formula:

$$\frac{\text{sealing means outer diameter (dm)}}{\text{channel line inner diameter (d)}} \leq 6$$

4. Connector arrangement (1) according to claim 2 or 3,
**characterized in that** the insertion sleeves (28) of the individual line (6) contain an orifice (16) which reduces the connection line inner diameter (D) down to the channel line inner diameter (d) of the connecting component (3) of the distributor (2).

5. Connector arrangement (1) according to one of claims 2 to 4,
**characterized in that** the insertion sleeves (28) are connected to the individual lines (6) in a firmly-bonded manner.

6. Connector arrangement (1) according to one of claims 2 to 5,
**characterized in that** tab-like rotational locks (30a) and guide webs (30b), which engage with corresponding grooves (32a) on the distributor (2) and guide grooves (32b) on the housing (10), protrude from outer wall (36) of the insertion sleeves (28) of the individual lines (6).

7. Connector arrangement (1) according to claim 6,
**characterized in that** the tab-like rotational locks (30a) are arranged at an angle offset by 90° on the outer wall (36) of the insertion sleeves (28) and the corresponding grooves (32a) on the distributor (2) are also offset by 90°, and the guide webs (30b) and the guide grooves (32b) in the housing (10) are always aligned in the direction of an insertion direction (M).

8. Connector arrangement according to one of 2 to 7,
**characterized in that** the insertion sleeves (28) can be electrically heated and are provided with at least one heating coil (38) on at least one side.

9. Connector arrangement (1) according to one of claims 1 to 8,

**characterized in that** the distributor (2) can be electrically heated and is circumferentially wrapped with at least one heating coil (38).

10. Connector arrangement (1) according to claim 8 or 9,
**characterized in that** the distributor (2) and/or the insertion sleeves (28), exhibit integrated guides and holders (42) for the heating coils (38).

11. Connector arrangement (1) according to claim 10,
**characterized in that** the housing (10) exhibits pocket-like indentations (58) for receiving the distributor (2) with its associated guides and holders (42).

12. Connector arrangement (1) according to one of claims 1 to 11, **characterized in that** the wall thickness (t) of the distributor (2) in the connecting component (3) circumferentially corresponds at least to the smallest channel line inner diameter (d).

13. Connector arrangement (1) according to one of claims 1 to 12, **characterized in that** one individual line (6) is connected in a firmly-bonded manner to the / with one of the cylindrical sleeves (18) of the distributor (2).

14. Connector arrangement (1) according to one of claims 1 to 13, **characterized in that** the housing (10) exhibits retaining means (12a, 12b) for the distributor (2) and the connecting means (8, 28), wherein at least a part of the retaining means (12a) for the connecting means (8, 28) in the housing (10) is configured in a C-shape, and the connecting means (8, 28) are fastened in a snap-in manner, and a further part of the retaining means (12b) for the distributor (2) is a stop tab (12) for the distributor (2), wherein the stop tab is positioned at an angle of 45° to the connecting elements (4, 18, 20) of the distributor (2), and against which the distributor (2) rests with an attachment tab (12c) which is disposed in a corresponding manner to the stop tab (12b) of the housing (10).

15. Connector arrangement (1) according to claim 1 or 2,
**characterized in that** the individual lines (6) can be electrically heated and are wrapped with at least two heating coils (38).

**Revendications**

1. Agencement de liaison (1), notamment pour le passage de solutions d'urée aqueuses, comprenant un distributeur (2) avec au moins trois éléments de raccordement (4, 18) et une partie de liaison (3) située entre les éléments de raccordement (4, 18) avec des canaux intérieurs (5) s'étendant dans celle-ci et trois conduites individuelles (6), les conduites individuelles (6) présentant des moyens de raccordement (8), et les conduites individuelles (6) étant reliées aux éléments de raccordement (4, 18) du distributeur (2) au moyen des moyens de raccordement (8), et un boîtier (10) qui entoure le distributeur (2) et au moins une partie des conduites individuelles (6), le distributeur (2) étant agencé dans le boîtier (10) conjointement avec les sections d'extrémité des conduites individuelles (6) reliées, un diamètre intérieur de canal (d) des canaux intérieurs (5) de la partie de liaison (3) et une longueur totale ($l_g$) des canaux intérieurs (5) de la partie de liaison (3) et une épaisseur de paroi (t) du distributeur (2) dans la partie de liaison (3) étant dimensionnés de telle sorte que, lors de la congélation d'un liquide se trouvant dans le distributeur (2), une pression de glace qui se produit ne provoque pas de destruction sur le distributeur (2), les éléments de raccordement (4, 18) étant des manchons cylindriques (18) dans chacun desquels est introduite une conduite individuelle (6), les canaux intérieurs (5) de la partie de liaison (3) s'étendant jusqu'aux transitions entre la partie de liaison (3) et les manchons cylindriques (18),
**caractérisé en ce que**
la longueur totale ($l_g$) des canaux intérieurs (5) de la partie de liaison (3) divisée par le diamètre intérieur de conduite de canal (d) de la partie de liaison (3) du distributeur (2) selon la formule suivante est inférieure ou égale à 9 :

$$\frac{\text{longueur totale } (l_g) \text{ des canaux intérieurs (5)}}{\text{diamètre intérieur de conduite de canal (d)}} \leq 9$$

et la partie de liaison (3) du distributeur (2) présentant un diamètre intérieur de conduite de canal (d) qui est inférieur ou égal à un diamètre intérieur de conduite de raccordement minimal (D) d'une conduite individuelle raccordée (6).

**2.** Agencement de liaison (1), notamment pour le passage de solutions d'urée aqueuses, comprenant un distributeur (2) avec au moins trois éléments de raccordement (4, 18, 20) et une partie de liaison (3) située entre les éléments de raccordement (4, 18, 20) avec des canaux intérieurs (5) s'étendant dans celle-ci et trois conduites individuelles (6), les conduites individuelles (6) présentant des moyens de raccordement (8, 28), et les conduites individuelles (6) étant reliées aux éléments de raccordement (4, 18, 20) du distributeur (2) au moyen des moyens de raccordement (8, 28), et un boîtier (10), qui entoure le distributeur (2) et au moins une partie des conduites individuelles (6), le distributeur (2) étant agencé dans le boîtier (10) conjointement avec les sections d'extrémité des conduites individuelles (6) reliées, un diamètre intérieur de canal (d) des canaux intérieurs (5) de la partie de liaison (3) et une longueur totale ($l_g$) des canaux intérieurs (5) de la partie de liaison (3) et une épaisseur de paroi (t) du distributeur (2) dans la partie de liaison (3) étant dimensionnés de telle sorte que, lors de la congélation d'un liquide se trouvant dans le distributeur (2), une pression de glace qui se produit ne provoque pas de destruction sur le distributeur (2), **caractérisé en ce qu'**un élément de raccordement (4, 18) est un manchon cylindrique (18) dans lequel est introduit une conduite individuelle (6) et les deux autres éléments de raccordement (4, 20) sont des raccords enfichables (20) qui sont respectivement enfichés dans des manchons d'enfichage (28) des deux autres conduites individuelles (6), les canaux intérieurs (5) de la partie de liaison (3) s'étendant jusqu'à l'extrémité côté raccordement des raccords enfichables (20) et se terminant à la transition entre la partie de liaison (3) et le manchon cylindrique (18), et la longueur totale (lg) des canaux intérieurs (5) de la partie de liaison (3) divisée par le diamètre intérieur de conduite de canal (d) de la partie de liaison (3) du distributeur (2) selon la formule suivante étant inférieure ou égale à 23 :

$$\frac{\text{longueur totale } (l_g) \text{ du canal intérieur (5)}}{\text{diamètre intérieur de conduite de canal (d)}} \leq 23$$

et la partie de liaison (3) du distributeur (2) présentant un diamètre intérieur de conduite de canal (d) qui est inférieur ou égal à un diamètre intérieur de conduite de raccordement minimal (D) d'une conduite individuelle (6) raccordée.

**3.** Agencement de liaison selon la revendication 2, **caractérisé en ce que** les raccords enfichables (20) présentent des zones d'étanchéité (22), et les zones d'étanchéité (22) ont des moyens d'étanchéité (24) agencés sur le pourtour, qui présentent un diamètre extérieur de moyen d'étanchéité ($d_m$), le diamètre extérieur de moyen d'étanchéité ($d_m$) au niveau d'un point de liaison entre le manchon d'enfichage (28) et le raccord enfichable (20) divisé par le diamètre intérieur de conduite de canal (d) selon la formule suivante étant inférieur ou égal à 6 :

$$\frac{\text{diamètre extérieur de moyen d'étanchéité } (d_m)}{\text{diamètre intérieur de conduite de canal (d)}} \leq 6$$

**4.** Agencement de liaison (1) selon la revendication 2 ou 3, **caractérisé en ce que** les manchons d'enfichage (28) de la conduite individuelle (6) contiennent un diaphragme (16) qui réduit le diamètre intérieur de conduite de raccordement (D) au diamètre intérieur de conduite de canal (d) de la partie de liaison (3) du distributeur (2).

**5.** Agencement de liaison (1) selon l'une quelconque des revendications 2 à 4, **caractérisé en ce que** les manchons d'enfichage (28) sont reliés aux conduites individuelles (6) par liaison de matière.

**6.** Agencement de liaison (1) selon l'une quelconque des revendications 2 à 5, **caractérisé en ce que**, sur une paroi extérieure (36) des manchons d'enfichage (28) des conduites individuelles (6), des dispositifs de blocage en rotation (30a) et des nervures de guidage (30b) de type languettes font saillie, qui s'engagent dans des rainures correspondantes (32a) sur le distributeur (2) et des rainures de guidage (32b) sur le boîtier (10).

**7.** Agencement de liaison (1) selon la revendication 6, **caractérisé en ce que** les dispositifs de blocage en rotation (30a) de type languettes sont agencés en décalage d'un angle de 90° sur la paroi extérieure (36) des manchons d'enfichage (28) et les rainures correspondantes (32a) sur le distributeur (2) sont également décalées de 90° et les nervures de guidage (30b) et les rainures de guidage (32b) dans le boîtier (10) sont toujours orientées dans la direction d'une direction d'enfichage (M).

**8.** Agencement de liaison (1) selon l'une quelconque des revendications 2 à 7, **caractérisé en ce que** les manchons d'enfichage (28) peuvent être chauffés électriquement et sont pourvus, au moins d'un côté, d'au moins un fil chauffant (38).

9. Agencement de liaison (1) selon l'une quelconque des revendications 1 à 8, **caractérisé en ce que** le distributeur (2) peut être chauffé électriquement et est enroulé sur le pourtour avec au moins un toron chauffant (38).

10. Agencement de liaison (1) selon la revendication 8 ou 9, **caractérisé en ce que** le distributeur (2) et/ou les manchons d'enfichage (28) présentent des guides et des supports (42) intégrés pour les torons chauffants (38).

11. Agencement de liaison (1) selon la revendication 10, **caractérisé en ce que** le boîtier (10) présente des cavités (58) de type poches pour recevoir le distributeur (2) avec ses guides et supports (42) associés.

12. Agencement de liaison (1) selon l'une quelconque des revendications 1 à 11, **caractérisé en ce que** l'épaisseur de paroi (t) du distributeur (2) dans la partie de liaison (3) correspond sur le pourtour au moins au plus petit diamètre intérieur de conduite de canal (d).

13. Agencement de liaison (1) selon l'une quelconque des revendications 1 à 12, **caractérisé en ce qu'**une conduite individuelle (6) est reliée par liaison de matière au/à un manchon cylindrique (18) du distributeur (2).

14. Agencement de liaison (1) selon l'une quelconque des revendications 1 à 13, **caractérisé en ce que** le boîtier (10) présente des moyens de support (12a, 12b) pour le distributeur (2) et les moyens de raccordement (8, 28), au moins une partie des moyens de support (12a) pour les moyens de raccordement (8, 28) dans le boîtier (10) étant conçus en forme de C et fixant les moyens de raccordement (8, 28) par encliquetage et une autre partie des moyens de support (12b) pour le distributeur (2) étant une languette de butée (12b) pour le distributeur (2), orientée selon un angle de 45° par rapport aux éléments de raccordement (4, 18, 20) du distributeur (2), contre laquelle le distributeur (2) s'appuie par un patte de fixation (12c) agencée de manière correspondante à la languette de butée (12b) du boîtier (10).

15. Agencement de liaison (1) selon l'une quelconque des revendications 1 à 14, **caractérisé en ce que** les conduites individuelles (6) peuvent être chauffées électriquement et sont enroulées avec au moins deux torons chauffants (38).

**Fig. 1**

**Fig. 2**

**Fig. 3**

**Fig. 4**

Fig. 5

Fig. 5a

Fig. 5b

Fig. 5c

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017101274 U1